# EUROPEAN PATENT APPLICATION

(11) **EP 3 421 985 A1**
(43) Date of publication of application: **02.01.2019**
(21) Application number: 17756559.5
(22) Date of filing: 22.02.2017
(51) Int. Cl.: G01N 27/409, G01N 27/41

(54) **GAS SENSOR ELECTRODE AND METHOD FOR PRODUCING SAME**

(30) Priority: 24.02.2016 JP 2016033678
(71) Applicant: Tanaka Kikinzoku Kogyo K.K., Chiyoda-ku Tokyo 100-6422 (JP)
(72) Inventor: OKAMOTO Nobuhisa, Hiratsuka-shi Kanagawa 254-0021 (JP); HOSOI Takuya, Hiratsuka-shi Kanagawa 254-0021 (JP); AKIYAMA Nobuyuki, Hiratsuka-shi Kanagawa 254-0021 (JP)
(74) Representative: Hoffmann Eitle
(86) International application number: PCT/JP2017/006684
(87) International publication number: WO 2017/146121

(57) **Abstract**

The present invention aims at providing an electrode having more sufficient electrode activity and electrical conductivity as a sensor electrode for various gas sensors than conventional sensor electrodes. The present invention relates to a gas sensor electrode including a platinum-containing layer having mixed and dispersed therein a conductive particle phase composed of Pt or a Pt alloy and a ceramic particle phase, and a ceramic layer containing a ceramic material, wherein the platinum-containing layer and the ceramic layer are porous, and the porosity of the ceramic layer as measured by image analysis of a cross-sectional SEM appearance is from 1 to 40% and the average pore size of the ceramic layer is from 0.1 to 5 µm.

## Description

### Technical Field

The present invention relates to a gas sensor electrode constituting a sensing portion of a gas sensor such as oxygen sensor and NOx sensor, and a production method thereof.

### Background Art

An electrode obtained by firing a metal paste has been heretofore used as the electrode constituting a sensor electrode or heater electrode for various gas sensors such as oxygen sensor, NOx sensor and exhaust gas temperature sensor.

A metal paste is used for the production of such an electrode, because it can cope with a complicated electrode pattern and in addition, when a metal paste is applied and calcined on a green sheet forming a ceramic substrate, this enables simultaneous production of a substrate and an electrode and is advantageous also from the viewpoint of production efficiency.

As for the configuration of the electrode-forming metal paste, a paste prepared by mixing a conductive particle such as noble metal and a ceramic powder such as Al₂O₃ and ZrO₂ with a solvent is known. A ceramic powder is mixed with a metal paste so as to correct the shrinkage factor difference between a metal paste and a green sheet at the time of simultaneously producing a substrate and an electrode by applying·firing the metal paste on a green sheet as described above and to thereby solve the problem of warpage or deformation of the substrate and enhance adhesion of the electrode.

The ceramic powder, in fact, ensures moldability of an electrode film but, on the other hand, disadvantageously increases the resistance value of the produced electrode film to greatly surpass that of a bulk metal electrode.

Patent Document 1 discloses a metal paste which can produce an electrode film kept from an increase in the resistance value while ensuring moldability of the electrode film and is excellent in the adhesion and conformability to the substrate, and an electrode produced using the metal paste.

In the metal paste above, as to the configuration of a conductive particle, a conductive particle having a core/sell structure formed by bonding·coating the outer surface of a core particle composed of a noble metal with a ceramic particle is applied. The core/shell structure of the conductive particle allows ceramic particles to be dispersed in a fine state in the process of firing a metal paste and prevents a ceramic powder from coarsening that causes a rise in resistance, and an electrode having low resistance is thereby formed.

On the other hand, an electrode formed from the metal paste above exerts desired properties in the application to a lead wire, heater electrode, etc., and its usefulness is confirmed, however, it is also known that the electrode can hardly exert sufficient performance as a sensor electrode working out to the sensing portion of various gas sensors. In a sensor electrode of a gas sensor, electrode activity according to the gas species as a measurement object in the test gas is required, but an electrode formed from the conventional metal paste is inferior in this electrode activity.

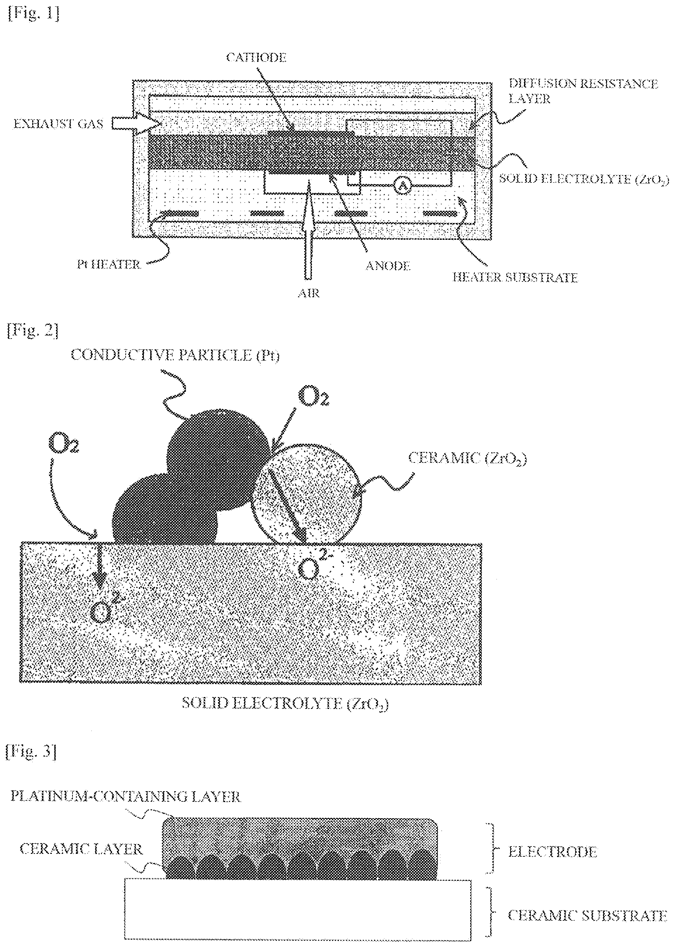

Fig. 1 is a diagram for explaining the configuration of an oxygen sensor as an example of the general gas sensor. In Fig. 1, a sensing portion of the gas sensor is provided by sandwiching a solid electrolyte between anode and cathode sensor electrodes. In gas analysis using the gas sensor, a measurement gas (oxygen) introduced into the cathode electrode passes through the inside of the electrode and reaches the solid electrolyte. At this time, an oxygen molecule is ionized by action of a conductive metal particle phase (e.g., platinum) in the cathode electrode and passes through the solid electrolyte, and based on the resulting change in current, the oxygen concentration is detected.

In this measurement process, the reaction for detecting an oxygen molecule occurs in a three-phase interface shared among the conductive metal, the solid electrolyte, and the measurement gas (FIG. 2). More specifically, the electrode activity of the sensor electrode depends on the amount of three-phase interface formed in the electrode.

Accordingly, the electrode activity of the gas sensor electrode can be enhanced by sufficiently forming the three-phase interface in the electrode. The method for forming a three-phase interface inside the electrode includes a method of making the electrode structure porous, but simply being porous is not enough, and as a prerequisite, the gas sensor electrode must have electrical conductivity (have low resistance) to fulfill the role of an electrical conductor.

As a sensor electrode having a porous structure favorable for a gas sensor electrode and at the same time, realizing electrical conductivity (low resistance) by suppressing the coarsening of a conductive particle, the present inventors have heretofore disclosed a sensor electrode in which an electrode having mixed therein a predetermined amount of ceramic particle has a predetermined porosity to let a three-phase interface serving as a reaction site for gas be in a preferable range and the conductive particle has a predetermined dispersivity to thereby increase the electrical conductivity (Patent Document 2).

### Related Art

### Patent Document

Patent Document 1: Japanese Patent No. 4,834,170
Patent Document 2: Japanese Patent No. 5,189,705

### Summary of the Invention

### Problems to Be Solved by the Invention

However, in the gas sensor electrode of the conventional technique, the electrode activity and electrical conductivity have not yet reached the level required in the art, and there is room for improvement.

Accordingly, an object of the present invention is to provide a gas sensor electrode having more sufficient electrode activity and electrical conductivity as a sensor electrode for various gas sensors than conventional sensor electrodes, and a production method thereof.

### Means for Solving the Problems

As described above, the electrode activity of a gas sensor electrode depends on the amount of three-phase interface formed in the electrode. Accordingly, the present inventors have made intensive studies so as to more increase the amount of three-phase interface formed in the electrode and more enhance the electrode activity of a gas sensor electrode. As a result, the present inventors have first found that in a gas sensor electrode including a platinum-containing layer having mixed and dispersed therein a conductive particle phase and a ceramic particle phase, when the gas sensor electrode further has a ceramic layer containing a ceramic material and the porosity and average pore size of the ceramic layer are in predetermined ranges, a three-phase interface can be sufficiently formed inside the electrode and the electrode activity of the gas sensor electrode can be further enhanced. The present invention has been accomplished based on this finding.

That is, the present invention is as follows.
1. A gas sensor electrode comprising:
   a platinum-containing layer having mixed and dispersed therein a conductive particle phase composed of Pt or a Pt alloy and a ceramic particle phase, and
   a ceramic layer containing a ceramic material,
   wherein the platinum-containing layer and the ceramic layer are porous, and
   a porosity of the ceramic layer as measured by image analysis of a cross-sectional SEM appearance is from 1 to 40% and an average pore size of the ceramic layer is from 0.1 to 5 µm.
2. The gas sensor electrode according to above 1,
   wherein a porosity of the platinum-containing layer as measured by image analysis of a cross-sectional SEM appearance is from 1 to 40% and an average pore size of the platinum-containing layer is from 0.1 to 5 µm.
3. The gas sensor electrode according to above 1 or 2,
   wherein a ratio of a film thickness of the ceramic layer to a film thickness of the platinum-containing layer is from 0.1 to 3.
4. A method for producing the gas sensor electrode according to any one of above 1 to 3, the production method of the gas sensor electrode comprising the following steps (1) to (3):
   (1) a step of coating a green sheet serving as a substrate with a ceramic paste obtained by dispersing a ceramic powder in a solvent,
   (2) a step of further coating the ceramic paste-coated green sheet surface with a metal paste obtained by dispersing a conductive particle composed of Pt or a Pt alloy and a ceramic powder in a solvent, and
   (3) a step of firing the green sheet coated with the ceramic paste and the metal paste at 1,300 to 1,600°C.

### Effects of the Invention

The gas sensor electrode according to the present invention has suitable electrode activity and electrical conductivity as a gas sensor electrode. More specifically, this electrode has a ceramic layer satisfying predetermined conditions, therefore allows fine conductive particle phase and ceramic particle phase to be appropriately dispersed while having a porous structure adequately including a three-phase interface necessary as a reaction site, and in turn, realizes high activity and decrease in the resistance value.

### Brief Description of the Drawings

[Fig. 1] Fig. 1 is a diagram illustrating the structure of a general oxygen sensor.
[Fig. 2] Fig. 2 is a diagram illustrating in detail the inside (three-phase interface) of an electrode of the oxygen sensor.
[Fig. 3] Fig. 3 is a diagram illustrating the structure of the gas sensor electrode of the present invention.
[Fig. 4] Fig. 4(a) to Fig. 4(d) are diagrams illustrating embodiments of a sensor electrode in which a metal paste is applied. Fig. 4(a) and Fig. 4(b) are an embodiment where the metal paste of the present invention is applied in tabular shape on a green sheet, and Fig. 4(c) and Fig. 4(d) are an embodiment where the metal paste of the present invention is applied in comb-like shape on a green sheet. Incidentally, Fig. 4(a) and Fig. 4(c) are top views, and Fig. 4(b) and Fig. 4(d) are front views.

### Mode for Carrying Out the Invention

The configuration of the present invention is described in more detail below.

### [Gas Sensor Electrode]

The gas sensor electrode of the present invention consists of, as illustrated in Fig. 3, a platinum-containing layer having mixed and dispersed therein a conductive particle phase composed of Pt or Pt alloy and a ceramic particle phase, and a ceramic layer containing a ceramic material, and is formed of a thin-film sintered body.

### (1) Platinum-Containing Layer

### (1-1) Conductive Particle Phase Composed of Pt or Pt Alloy

In the present invention, the conductive particle phase is composed of Pt or a Pt alloy. Such a metal has good conductivity and also is excellent in heat resistance or corrosion resistance. Some of various sensors, such as exhaust sensor for an automobile, are used under high temperature, and the metal above is suitable as an electrode material for these sensors.

Whether to use Pt or a Pt alloy as the conductive particle phase can be appropriately selected according to usage and required properties. Pt has low resistance compared with a Pt alloy and is suitable for an electrode in which reduction of resistance is preferentially required. On the other hand, a Pt alloy has higher resistance than Pt but has a low temperature coefficient of resistance (TCR) and is thus suitable for an electrode requiring low TCR.

In the case of applying Pt as the conductive particle phase, the purity of Pt is preferably higher and, specifically, is preferably 99.90% or more, more preferably, 99.95% or more, still more preferably 99.97% or more. Because, when the Pt purity is high, an electrode with higher activity and lower resistance is obtained.

Furthermore, in the case of applying a Pt alloy, the metal alloyed with Pt is preferably Pd, Au, Ag, and Rh. In addition, a Pt alloy containing any one or more of Pd, Au and Rh is more preferable in view of good compatibility with ceramic serving as a substrate and good wettability when forming a paste.

With respect to a Pt-Pd alloy, the Pd content is preferably 30 mass% or less. Because, if the Pd content is too high, a Pd oxide is likely to precipitate in the firing process and consequently, the reliability of the electrode is decreased. More preferably, a Pt alloy containing at least either one noble metal of Au or Rh is used.

### (1-2) Ceramic Particle Phase

The platinum-containing layer in the present invention includes a ceramic particle phase. The ceramic particle phase is an essential component in order for the platinum-containing layer to act as a skeleton for a porous structure.

The ceramic particle phase is preferably a phase composed of a ceramic containing ZrO₂. Considering its original action of adjusting the shrinkage factor relative to the substrate, a ceramic mixed in conventional metal pastes should be applied.

The ceramic containing ZrO₂ includes, in addition to pure zirconia, stabilized zirconia in which several % of an oxide such as yttria or calcia is added. Furthermore, a ceramic obtained by mixing ZrO₂ with another oxide such as Y₂O₃ may also be applied. In the case of applying stabilized zirconia, the blending amount of yttria, etc. is not particularly limited.

As the ceramic powder of the metal paste, the same material as the ceramic used in a substrate to be coated is basically preferred and therefore, the ceramic may contain a ceramic having oxide ion conductivity (e.g., an oxide of La, Ce, Pr, Nd, Sm, Hf, etc.) other than ZrO₂.

In the gas sensor electrode according to the present invention, the amount dispersed (content percentage) of the ceramic particle phase is preferably from 5 to 20 mass% based on the mass of the solid content. If the amount dispersed is less than 5 mass%, this makes it difficult for the phase to exert its original action (action of following the shrinkage factor of substrate) and in addition, is insufficient to form a skeleton for obtaining a porous structure of electrode. On the other hand, if the amount dispersed exceeds 20 mass%, a proximity state of the conductive metal inside the electrode can hardly be obtained, resulting in a rise of resistance, and the sensor electrode may lose the function as an electrode.

### (1-3) Porosity and Average Pore Size of Platinum-Containing Layer

The platinum-containing layer in the present invention has a porous structure. In the platinum-containing layer, the porosity as measured by image analysis of a cross-sectional SEM appearance is preferably from 1 to 40%, more preferably from 2 to 20%, still more preferably from 2.5 to 15%.

The porosity of the platinum-containing layer is an area percentage, in an electrode cross-section, of a space occupied neither by the conductive particle phase nor by the ceramic particle phase in the platinum-containing layer. As to the calculation method, for example, a portion with an area of 20 µm square is arbitrarily selected from a microstructure photograph and subjected to binarization processing, and images of wall part and void of the platinum-containing layer are distinguished. The conditions for performing the binarization processing are appropriately set according to the image obtained, and, for example, empirically determined values are used. A wall part and a void of the platinum-containing layer are separated in the binarized image, and the area ratio therebetween is calculated and taken as the porosity.

If the porosity of the platinum-containing layer is less than 1%, the electrode will be too dense, and the reaction site for gas may be lacked, resulting in poor electrode activity. On the other hand, if the porosity exceeds 40%, the resistance of the electrode tends to increase.

In the platinum-containing layer of the present invention, the average pore size is preferably from 0.1 to 5 µm. The average pore size of the platinum-containing layer indicates an average void size determined by using a binarized image obtained at the time of the above-described image analysis of cross-sectional SEM appearance and measuring the diameters of all voids (in the case where the void is in elliptical shape or flat shape, the minor diameter) included in the image. When the average pore size of the platinum-containing layer is in the range above, gas diffusion is facilitated and therefore, a three-phase interface serving as a reaction site for gas can be increased.

### (1-4) Film Thickness of Platinum-Containing Layer

The film thickness of the platinum-containing layer is preferably from 5 to 20 µm, more preferably from 7 to 13 µm. Because, within this range, a sufficient three-phase interface is obtained.

### (2) Ceramic Layer

### (2-1) Ceramic Layer Containing Ceramic Material

The gas sensor electrode of the present invention includes a ceramic layer containing a ceramic material, in addition to the above-described platinum-containing layer. When the gas sensor electrode of the present invention includes a ceramic layer, the three-phase interface serving as a reaction site for gas can be increased. The reason therefor is that a gas diffuses into the newly added ceramic layer, enabling the gas to diffuse to the reactive electrode/solid electrolyte interface which is conventionally difficult for the gas to reach, and the reaction area can be greatly increased.

Similarly to the above-described ceramic particle phase, the ceramic material is preferably a ceramic containing ZrO₂. As the ceramic containing ZrO₂, the same as that used in the ceramic particle phase can be used.

The ceramic layer in the present invention may contain a noble metal. In the case of containing a noble metal, the noble metal is preferably contained in an amount of less than the content of Pt or Pt alloy in the platinum-containing layer and is preferably contained in an amount of 80 mass% or less. In the case of containing a noble metal, the noble metal is not particularly limited, but it is preferable to contain any one or more of Pt, Au, Rh and Pd, and it is more preferable to contain any one or more of Pt, Au and Rh.

### (2-2) Porosity and Average Pore Size of Ceramic Layer

The ceramic layer in the present invention has a porous structure. In the ceramic layer, the porosity as measured by image analysis of a cross-sectional SEM appearance is from 1 to 40%.

As to the calculation method, for example, a portion with an area of 20 µm square is arbitrarily selected from a microstructure photograph and subjected to binarization processing, and images of wall part and void of the ceramic layer are distinguished. The conditions for performing the binarization processing are appropriately set according to the image obtained, and, for example, empirically determined values are used. A wall part and a void of the ceramic layer are separated in the binarized image, and the area ratio therebetween is calculated and taken as the porosity. Incidentally, the area ratio in the cross-section is regarded as substantially corresponding to the volume ratio and designated as porosity (vol%).

The porosity of the ceramic layer is preferably from 3 to 30%, more preferably from 5 to 20%. The porosity of the ceramic layer is an area percentage, in an electrode cross-section, of a space not occupied by a ceramic material or a noble metal-containing ceramic material in the ceramic layer. When the porosity of the ceramic layer is in the range above, gas diffusion is facilitated, and a three-phase interface serving as a reaction site for gas can be increased.

In the ceramic layer of the present invention, the average pore size is from 0.1 to 5 µm. The average pore size of the ceramic layer indicates an average void size determined by using a binarized image obtained at the time of the above-described image analysis of cross-sectional SEM appearance and measuring the diameters of all voids (in the case where the void is in elliptical shape or flat shape, the minor diameter) included in the image. When the average pore size of the ceramic layer is in the range above, gas diffusion is facilitated and therefore, a three-phase interface serving as a reaction site for gas can be increased. The average pore size of the ceramic layer is more preferably from 0.3 to 3 µm, and within this rage, gas diffusion is facilitated.

### (2-3) Film Thickness of Ceramic Layer

The film thickness of the ceramic layer is preferably from 2 to 30 µm, more preferably from 3 to 20 µm. Within this range, gas diffusion is facilitated..

### (3) Thickness of Gas Sensor Electrode

The gas sensor electrode of the present invention is a thin-film sintered body. The film thickness thereof is preferably from 5 to 20 µm, more preferably from 7 to 15 µm. Within this range, gas diffusion is facilitated.

The ratio of the film thickness of the ceramic layer to the film thickness of the platinum-containing layer (film thickness of ceramic layer/film thickness of platinum-containing layer) is preferably from 0.1 to 3, more preferably from 0.2 to 2.5, still more preferably from 0.3 to 2.0. Within this range, gas diffusion is facilitated.

### [Production Method of Gas Sensor Electrode]

As the method for producing the gas sensor electrode of the present invention, first, a green sheet is coated with a ceramic paste containing a ceramic material and after further applying a metal paste thereon, these are heated to form a gas sensor electrode consisting of a platinum-containing layer and a ceramic layer on a ceramic substrate. Incidentally, the platinum-containing layer is fired by heating the metal paste, the ceramic layer is fired by heating the ceramic paste, and the ceramic substrate is fired by heating the green sheet. This is described in detail below.

### (Metal Paste)

The platinum-containing layer in the present invention is fired from the metal paste of this paragraph. The metal paste is obtained by dispersing a conductive particle composed of Pt or a Pt alloy and a ceramic powder in a solvent.

In addition to the conductive particle and ceramic powder, it is preferable to contain an inorganic oxide particle and an insoluble organic particle or a carbon or diamond powder (hereinafter, sometimes referred to as "insoluble organic particle, etc.").

### <Conductive Particle>

The conductive particle phase in the gas sensor electrode of the present invention is fired from a conductive particle. Accordingly, as the conductive particle in the metal paste, Pt or a Pt alloy before sintering in the conductive particle phase is used. The average particle diameter of the conductive particle in the metal paste is preferably from 5 nm to 2 µm. A particle of less than 5 nm exhibits poor dispersibility, making it difficult to produce a homogeneous metal paste. On the other hand, a conductive particle of more than 2 µm readily forms a coarse particle even in the presence of an inorganic oxide particle added as a sintering inhibitor and tends to increase the resistance of the electrode. The average particle diameter of the conductive particle can be measured using a laser diffraction particle size distribution analyzer (MT3000, manufactured by Microtrac).

The amount of the conductive particle mixed in the metal paste is preferably from 72 to 88.5 mass% based on the mass of the solid content.

### <Ceramic Powder>

The ceramic particle phase in the gas sensor electrode of the present invention is fired from a ceramic powder. Accordingly, as the ceramic powder in the metal paste, a ceramic material before firing in the ceramic particle phase is used.

The shape of the ceramic powder in the metal paste is not particularly limited and may be spherical, needle-like or amorphous. Among others, in view of suppression of sintering and increase of three-phase interface, the shape is preferably amorphous.

The average particle diameter of the ceramic powder in the metal paste is preferably from 0.1 to 5 µm, more preferably from 0.1 to 3 µm, still more preferably from 0.1 to 2 µm, and most preferably from 0.3 to 2 µm. The average particle diameter of the ceramic particle can be measured using a laser diffraction particle size distribution analyzer (MT3000, manufactured by Microtrac).

### <Inorganic Oxide Particle>

In the metal paste, an inorganic oxide particle is preferably incorporated in order to suppress sintering of the conductive particle and prevent the conductive particle from coarsening. The coarsening of the conductive particle affects the resistance of the electrode and therefore, the inorganic oxide particle is configured to be added so as to reduce the resistance of the electrode. The inorganic oxide particle applied as a sintering inhibitor for the conductive particle is composed of alumina (Al₂O₃). These two inorganic oxides can prevent the conductive particles from sintering to each other in the paste in the firing process.

The content of the inorganic oxide particle is, based on the mass of the solid content, preferably from 0.5 to 5.0 mass%, more preferably from 0.5 to 4.0 mass%, still more preferably from 0.5 to 3.0 mass%, and most preferably from 0.5 to 2.0 mass%. If the content is less than 0.5 mass%, the effect of suppressing sintering of the conductive particle will be insufficient, and if it exceeds 5.0 mass%, the oxide ion conductivity is disadvantageously inhibited.

The average particle diameter of the inorganic oxide particle is preferably from 5 to 500 nm. If the average particle diameter is less than 5 nm, this makes uniform dispersion in the paste difficult and may incur a risk of local coarsening of the conductive particle. In addition, since the inorganic oxide particle is also sintered in the firing process, an inorganic oxide particle having a large particle diameter causes coarsening and makes it impossible for the conductive particle to uniformly exert the effect of suppressing sintering. For this reason, the upper limit is preferably 500 nm. Considering the action in the present invention, the inorganic oxide particle may not sufficiently function if its particle diameter is too small or too large.

The average particle diameter of the inorganic oxide particle can be measured using a laser diffraction particle size distribution analyzer (MT3000, manufactured by Microtrac).

### <Insoluble Organic Particle, etc.>

In the metal paste, an insoluble organic particle or a carbon or diamond powder (hereinafter, sometimes referred to as "insoluble organic particle, etc.") is preferably contained. The "insoluble" of this organic particle means that the particle is insoluble in a solvent capable of mixing·dispersing various constituents of the metal paste.

The insoluble organic particle, etc. is dispersed in a solid state in the metal paste and maintains this state even after being applied to a substrate but disappears in the firing process. Accordingly, in the electrode after firing, a pore is formed in a portion where the insoluble organic particle, etc. has been present. A porous structure is imparted by such an action to the electrode so as to achieve formation of a three-phase interface and enhancement of the electrode activity. That is, the metal paste is configured to contain the insoluble organic particle, etc. as a factor for enhancing the electrode activity.

The amount added of the insoluble organic particle, etc. is preferably from 1.0 to 5.0 mass% based on the mass of the solid content. If the amount added is less than 1.0 mass%, sufficient pores cannot be formed. On the other hand, if the amount added exceeds 5.0 mass%, the fired film becomes thin, and a required film thickness is disadvantageously not obtained.

The average particle diameter of the insoluble organic particle is preferably from 0.2 to 5 µm, more preferably from 0.5 to 3 µm. If the average particle diameter is less than 0.2 µm, the pore is too small to allow for sufficient diffusion of gas, and if it exceeds 5 µm, the pore is too large, making the dispersion of fine pores over the entire film insufficient.

The average particle diameter of the insoluble organic particle can be measured using a laser diffraction particle size distribution analyzer (MT3000, manufactured by Microtrac).

Specific examples of the insoluble organic particle that can be applied include an organic resin such as acryl, polyethylene, polyethylene terephthalate, polycarbonate and fluororesin, and theobromine. Because, these are insoluble in a solvent generally used for a metal paste and can be burnt down at high temperature.

The metal paste preferably contains both the inorganic oxide particle and the insoluble organic particle, etc. Because, both have different mechanisms from each other and thus exert different effects (an effect of suppressing the coarsening of the conductive particle and an effect of making the electrode structure porous).

### (Ceramic Paste)

The ceramic layer of the present invention is fired from the ceramic paste of this paragraph. As the ceramic material in the ceramic paste, the same kind as the ceramic powder in the above-described metal paste can be used.

The average particle diameter of the ceramic particle in the ceramic paste is preferably from 0.1 to 5 µm, more preferably from 0.1 to 3 µm, still more preferably from 0.1 to 2 µm, and most preferably from 0.3 to 2 µm. In the present invention, when the particle diameter of the ceramic particle is in the range above, gas diffusion is facilitated, and the resistance value of the reactive electrode decreases.

### (Other Components)

### <Solvent>

As the solvent applicable to the production of the above-described metal paste and ceramic paste, a conventionally employed solvent can be used. Specifically, common solvents such as ethylene glycol, propylene glycol, ethylene glycol monophenyl ether, benzyl alcohol, kerosene, paraffin, γ-butyrolactone, N-methylpyrrolidone, butyl carbitol, turpentine oil, α-terpineol and terpineol can be applied. These solvents may be used not only individually but also by blending two or more thereof.

In the metal paste and ceramic paste according to the present invention, as for the mixing amount of the solvent and the solid content (e.g., conductive particle, ceramic powder, and preferably inorganic oxide particle, insoluble organic particle, etc.), the amount of the solid content is preferably from 50 to 90 mass% relative to the whole paste. Because, if the amount is less than 50 mass%, the electrode film becomes too thin, and if it exceeds 90 mass%, paste formation is difficult.

### <Resin>

The metal paste and ceramic paste may contain a resin usually used in order for the paste to have viscosity or thixotropy. This resin is generally, for example, a natural resin, an amino-based resin, or an alkyd resin. In particular, a resin like ethyl cellulose is suited.

### <Surfactant>

The metal paste and ceramic paste may contain a surfactant so as to suppress a change in viscosity over time. The surfactant includes, for example, fatty acid-based and higher alcohol-based surfactants. Among others, an anionic surfactant is preferred, and a diamine-based anionic surfactant is more preferred.

### (Production Method of Metal Paste)

The metal paste can be produced by mixing a conductive particle, a ceramic powder, and preferably an inorganic oxide particle, an insoluble organic particle, etc. with a solvent. At this time, it is possible to previously mix respective powders of a conductive particle, a ceramic powder, an inorganic acid particle and an insoluble organic particle, etc. and disperse the mixed powder in a solvent, or to sequentially add·disperse respective powders in a solvent. At the time of mixing of the solvent and the solid content, sufficient mixing·kneading is preferably performed by means of a three-roll mill, etc. to achieve uniformity.

### (Production Method of Gas Sensor Electrode)

The method for producing the gas sensor electrode of the present invention includes the following steps (1) to (3):
(1) a step of coating a green sheet serving as a substrate with a ceramic paste obtained by dispersing a ceramic powder in a solvent,
(2) a step of further coating the ceramic paste-coated green sheet surface with a metal paste obtained by dispersing a conductive particle composed of Pt or a Pt alloy and a ceramic powder in a solvent, and
(3) a step of firing the green sheet coated with the ceramic paste and the metal paste at 1,300 to 1,600°C.

Each step is described below.

### (1) Step of coating a green sheet serving as a substrate with a ceramic paste prepared by dispersing a ceramic powder in a solvent

The ceramic paste used in this step is a paste obtained by dispersing a ceramic powder in a solvent, and the above-described ceramic paste is used.

As the method for coating the green sheet with the ceramic paste, a conventionally known method can be employed, and the method is not particularly limited. For example, a technique using screen printing or dispenser may be utilized.

The applied ceramic paste forms a ceramic layer in the later-described firing step.

The green sheet working out to a substrate includes, for example, alumina and stabilized zirconia and among others, preferably has the same components as the ceramic powder in the ceramic paste. Because, at the time of applying·firing the ceramic paste and the later-described metal paste on the green sheet to simultaneously produce a ceramic substrate and an electrode, the shrinkage factor difference between the ceramic paste and the green sheet can be corrected to solve the problem of warpage or deformation of the substrate and enhance adhesion of the electrode.

### (2) Step of further applying a metal paste obtained by dispersing a conductive particle composed of Pt or a Pt alloy and a ceramic powder in a solvent, onto the ceramic paste applied in the step (1)

The metal paste used in this step is a paste obtained by dispersing a conductive particle composed of Pt or a Pt alloy and a ceramic powder in a solvent, and the above-described metal paste can be used.

The metal paste according to the present invention is, as illustrated in Fig. 3, further applied onto the ceramic paste applied in the step (1).

The method for applying the metal paste according to the present invention is not particularly limited. For example, a technique using screen printing or dispenser may be utilized.

The metal paste applied forms a platinum-containing layer in the later-described firing step.

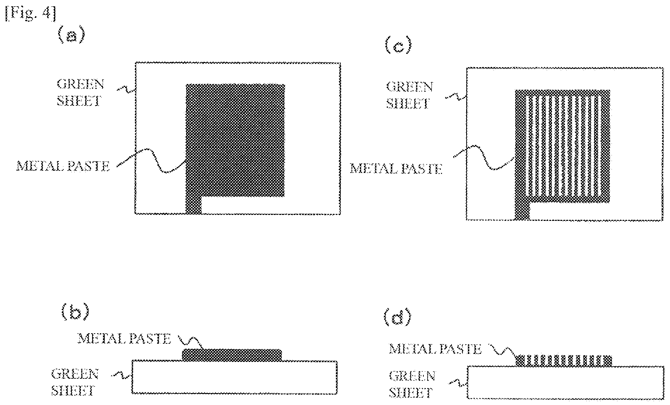

In the steps (1) and (2), as for the coating with the ceramic paste or metal paste, the paste may be applied in tabular shape as illustrated in Fig. 4(a) and Fig. 4(b) or, preferably, may be applied in comb-like shape as illustrated in Fig. 4(c) and Fig. 4(d). When the paste is applied in comb-like shape as illustrated in Fig. 4(c) and Fig. 4(d), the contact area of the ceramic paste and the metal paste with the substrate is increased, leading to an increase in the three-phase interface, and the electrode activity can thereby be enhanced.

### (3) Step of firing the green sheet coated with the ceramic paste and the metal paste at 1,300 to 1,600°C

In the case of producing the sensor electrode from the above-described ceramic paste and metal paste, the firing temperature is preferably from 1,300 to 1,600°C. Because, sufficient sintering and a low resistance value are obtained. The electrode film formed in this way has a porous structure including appropriate pores while letting fine particles be dispersed. As for the firing technique, any conventionally known method may be employed.

In the gas sensor electrode produced using the metal paste of the present invention, the resistance value of an electrode with a size of 2 mm×4 mm, which is calculated by measuring a current frequency response with respect to a voltage at an amplitude of 20 mV and a frequency ranging from 100 kHz to 0.1 Hz in an air atmosphere at 600°C, is preferably 200 Ω or less, more preferably 150 Ω or less, still more preferably 130 Ω or less, yet still more preferably 100 Ω or less.

### Examples

The effectiveness of the present invention is described below by referring to Examples, but the present invention is not limited thereto.

### [Example 1]

### <Manufacture of Electrode>

The metal paste was produced by adopting Pt (average particle diameter: 0.7 µm) as the conductive particle and YSZ (average particle diameter: 1.0 µm) as the ceramic powder and further mixing an inorganic oxide particle (Al₂O₃) and an insoluble organic particle (diamond powder). The ceramic paste was produced by adopting YSZ (average particle diameter: 1.0 µm) as the ceramic powder. These metal paste and ceramic paste were applied·fired on a substrate to form an electrode, and the electrical properties thereof were evaluated.

In the production of the metal paste, respective powders were mixed and poured in terpineol (solvent) and after further adding a diamine-based surfactant and ethyl cellulose (resin), mixed·kneaded in a three-roll mill to form a paste. The mixing amount of the mixed powder was 80 mass% relative to the whole paste.

In the production of the ceramic paste, a ceramic powder (YSZ (average particle diameter: 1.0 µm)) was poured in terpineol (solvent) and after further adding a diamine-based surfactant and ethyl cellulose (resin), mixed·kneaded in a three-roll mill to form a paste. The mixing amount of the powder was 70 mass% relative to the whole paste.

After the metal paste and ceramic paste were produced, an electrode was formed and evaluated. In the formation of the electrode, the ceramic paste and metal paste produced above were applied in this order in tabular shape as illustrated in Fig. 4(a) and Fig. 4(b) on a 99 mass% YSZ green sheet (thickness: 0.3 mm) by screen printing and then fired at 1,450°C for 1 hour to form an electrode consisting of a platinum layer and a ceramic layer. The electrode was manufactured to have a size of 2 mm×4 mm and a thickness of 10±3 µm after firing. The ratio of the film thickness of the ceramic layer to the film thickness of the platinum-containing layer after firing (film thickness of ceramic layer/film thickness of platinum-containing layer) was 2.0.

### <Measurement of Electrical Resistance Value>

In order to evaluate the electrode activity of each of the electrodes formed, an electrode of 2 mm×4 mm was measured for the electrode resistance by an AC impedance method. As for the measurement conditions, the current frequency response with respect to a voltage at an amplitude of 20 mV and a frequency ranging from 100 kHz to 0.1 Hz without DC bias was measured in an air atmosphere at 600°C, and the electrode resistance value was calculated. In addition, the image analysis of cross-sectional SEM appearance of the platinum-containing layer and ceramic layer was conducted using an image analysis software (trade name: image J) by means of SEM manufactured by JOEL (model number: JSM-6010LA). From the image analysis results, the porosity and average pore size were calculated.

### [Example 2]

An electrode was manufactured in the same manner as in Example 1 except that in Example 1, YSZ (average particle diameter: 1.5 µm) was adopted as the ceramic powder used for the ceramic paste in the manufacture of the electrode, the film thickness of the electrode after firing was changed to 20±3 µm, and the ratio of the film thickness of the ceramic layer to the film thickness of the platinum-containing layer was changed to 1.0, and measured for the electrical resistance value.

### [Example 3]

An electrode was manufactured in the same manner as in Example 1 except that in Example 1, YSZ (average particle diameter: 0.3 µm) was adopted as the ceramic powder used for the ceramic paste in the manufacture of the electrode, YSZ (average particle diameter: 0.3 µm) was adopted as the ceramic powder used for the metal paste, and the ratio of the film thickness of the ceramic layer to the film thickness of the platinum-containing layer after firing was changed to 0.5, and measured for the electrical resistance value.

### [Comparative Example 1]

An electrode was manufactured in the same manner as in Example 1 except that in Example 1, the ceramic layer was not provided in the manufacture of the electrode, and measured for the electrical resistance value.

### [Comparative Example 2]

An electrode was manufactured in the same manner as in Example 1 except that in Example 1, YSZ (average particle diameter: 7.0 µm) was adopted as the ceramic powder used for the ceramic paste in the manufacture of the electrode, YSZ (average particle diameter: 2.0 µm) was adopted as the ceramic powder used for the metal paste, the film thickness of the electrode after firing was changed to 20±3 µm, and the ratio of the film thickness of the ceramic layer to the film thickness of the platinum-containing layer was changed to 3.0, and measured for the electrical resistance value.

In Example 1, the porosity and average pore size of the ceramic layer were 7% and 0.5 µm, respectively, the porosity and average pore size of the platinum-containing layer were 15% and 0.5 µm, respectively, and the electrode resistance value was 93 Ω. In Example 2, the porosity and average pore size of the ceramic layer were 18% and 2.5 µm, respectively, the porosity and average pore size of the platinum-containing layer were 15% and 0.5 µm, respectively, and the electrode resistance value was 98 Ω. In Example 3, the porosity and average pore size of the ceramic layer were 5% and 0.3 µm, respectively, the porosity and average pore size of the platinum-containing layer were 9% and 0.3 µm, respectively, and the electrode resistance value was 127 Ω. In Comparative Example 1, the porosity and average pore size of the platinum-containing layer were 15% and 0.5 µm, respectively, and the electrode resistance value was 226 Ω. In Comparative Example 2, the porosity and average pore size of the ceramic layer were 45% and 6.1 µm, respectively, the porosity and average pore size of the platinum-containing layer were 21% and 1.7 µm, respectively, and the electrode resistance value was 278 Ω. In Examples, the electrode resistance value was small, compared with Comparative Examples, and the electrode activity and electrical conductivity were enhanced.

While the invention has been described in detail and with reference to specific embodiments thereof, it will be apparent to one skilled in the art that various changes and modifications can be made therein without departing from the spirit and scope of the invention. This application is based on Japanese Patent Application (Patent Application No. 2016-033678) filed on February 24, 2016, the entirety of which is incorporated herein by way of reference.

### Industrial Applicability

According to the present invention, a gas sensor electrode excellent in the electrode activity and electrical conductivity can be provided. The present invention is suitable as a sensor electrode for gas sensors such as oxygen sensor electrode and NOx sensor.

## Claims

1. A gas sensor electrode comprising:
a platinum-containing layer having mixed and dispersed therein a conductive particle phase composed of Pt or a Pt alloy and a ceramic particle phase, and
a ceramic layer containing a ceramic material,
wherein the platinum-containing layer and the ceramic layer are porous, and
a porosity of the ceramic layer as measured by image analysis of a cross-sectional SEM appearance is from 1 to 40% and an average pore size of the ceramic layer is from 0.1 to 5 µm.

2. The gas sensor electrode according to claim 1,
wherein a porosity of the platinum-containing layer as measured by image analysis of a cross-sectional SEM appearance is from 1 to 40% and an average pore size of the platinum-containing layer is from 0.1 to 5 µm.

3. The gas sensor electrode according to claim 1 or 2,
wherein a ratio of a film thickness of the ceramic layer to a film thickness of the platinum-containing layer is from 0.1 to 3.

4. A method for producing the gas sensor electrode according to any one of claims 1 to 3, the production method of the gas sensor electrode comprising the following steps (1) to (3):
(1) a step of coating a green sheet serving as a substrate with a ceramic paste obtained by dispersing a ceramic powder in a solvent,
(2) a step of further coating the ceramic paste-coated green sheet surface with a metal paste obtained by dispersing a conductive particle composed of Pt or a Pt alloy and a ceramic powder in a solvent, and
(3) a step of firing the green sheet coated with the ceramic paste and the metal paste at 1,300 to 1,600°C.
